# EUROPÄISCHE PATENTSCHRIFT

(11) **EP 1 984 144 B1**
(45) Veröffentlichungstag und Bekanntmachung des Hinweises auf die Patenterteilung: **21.04.2010**
(21) Anmeldenummer: 07703346.2
(22) Anmeldetag: 08.02.2007
(51) Int. Cl.: B23Q 11/10

(54) **VERFAHREN UND VORRICHTUNG ZUM BESTÜCKEN EINER WERKZEUGMASCHINE MIT WERKZEUGEN**
METHOD AND DEVICE FOR FITTING A MACHINE TOOL WITH TOOLS
PROCEDE ET DISPOSITIF POUR MONTER DES OUTILS SUR UNE MACHINE-OUTIL

(30) Priorität: 14.02.2006 DE 102006006958
(43) Veröffentlichungstag der Anmeldung: 29.10.2008
(73) Patentinhaber: Richard Bähr GmbH Formen-und Werkzeugbau, 89186 Illerrieden (DE)
(72) Erfinder: BÄHR, Richard, 89186 Illerrieden (DE)
(74) Vertreter: Dr. Weitzel & Partner
(86) Internationale Anmeldenummer: PCT/EP2007/001069
(87) Internationale Veröffentlichungsnummer: WO 2007/093317

(56) Entgegenhaltungen:
- DE-A1- 4 326 023
- US-A- 4 669 933
- US-A- 4 795 292
- US-A- 5 275 516
- US-A1- 2005 169 718

## Beschreibung

Die Erfindung betrifft das Bearbeiten von Werkstücken in einer Werkzeugmaschine mittels mehrerer Bearbeitungsvorgänge. Dabei werden für die einzelnen Bearbeitungsvorgänge verschiedene Werkzeuge verwendet. Die Werkzeuge kommen nacheinander zum Einsatz. Dabei kommen sowohl Werkzeuge ein- und derselben Kategorie in Betracht, wie beispielsweise Fräser, aber auch Werkzeuge unterschiedlicher Kategorie, beispielsweise Fräser, Bohrer und so weiter.

Die Werkzeuge werden in einem Werkzeugmagazin gespeichert. Dabei kann es sich beispielsweise um einen Drehteller handeln, an dessen Umfang eine Vielzahl von Bohrern, Fräsern und so weiter in vertikaler Position aufgehängt sind. Ein solches Magazin ist Bestandteil eines Werkzeugwechslers, der ein bestimmtes Werkzeug zu einem bestimmten Zeitpunkt der Werkzeugmaschine zuführt. Auf diese Weise wird ein Bearbeitungsprogramm in einer bestimmten Sequenz mit unterschiedlichen Werkzeugen und Bearbeitungsdauern abgearbeitet.

Wenn hier von "Werkzeugmaschine" die Rede ist, so versteht es sich natürlich, dass hierunter auch ein Bearbeitungszentrum modernster Bauart zu verstehen ist, mit welchem jegliche spanabhebenden Bearbeitungsvorgänge durchgeführt werden können.

Ein entscheidendes Element jeder Werkzeugmaschine mit spanabhebender Bearbeitung ist das Kühl-, Schmier- und Spülsystem. Hiermit werden sowohl Werkzeug wie auch Werkstück gekühlt und gespült, das heißt von Spänen befreit. Wird dies nicht in perfekter Weise durchgeführt, so können Schäden am Werkzeug wie auch am Werkstück auftreten. Besonders gravierend sind Schäden, die nicht sofort bei ihrem Auftreten erkannt werden. Ein extrem wichtiger Gesichtspunkt sind die Kosten von Werkzeugen. So kann beispielsweise ein Hartmetallfräser einige hundert Euro kosten. Die Spülung ist von fundamentaler Wichtigkeit für die Standzeit des Fräsers. Diese kann nach Stunde zählen, aber auch nach Minuten, oder sogar nach Sekunden. Mitentscheidend für die Standzeit ist die Spülung und Kühlung.

Die Spülung muss somit einerseits effizient sein. Dies bedeutet, dass der Durchsatz des Spülmediums ausreichend zu sein hat, das heißt genügend reichlich, um sämtliche Späne zu erfassen, auch Spanpartikel minimaler Abmessungen. Andererseits muss die Spülung eine wirtschaftliche sein, das heißt, dass das Spülmedium nicht im Übermaß herangefördert werden darf, da die Förderenergie ein wichtiger Posten der Kostenrechnung ausmacht. Dies gilt insbesondere für Flüssigkeiten, aber auch für Luft als Spülmedium.

Die Effizienz hängt in starkem Maße davon ab, dass der Spülstrahl des Mediums an der richtigen Stelle auftrifft, insbesondere am Ort des Spanabhebens. Der Mediumstrahl sollte somit immer unter dem richtigen Winkel aus den Düsen eines entsprechenden Düsenkörpers austreten, so dass er an der richtigen Stelle auftritt. Genau dies ist jedoch nicht immer der Fall.

Der Grund hierfür liegt darin, dass die Werkzeuge unterschiedliche Abmessungen haben, beispielsweise kurz oder lang oder dick oder dünn sind. Man behilft sich bisher damit, dass man den oder die Mediumstrahlen auf eine Stelle lenkt, die bei durchschnittlichen Abmessungen die richtige Stelle ist. Da dies nur eine Näherungslösung sein kann, versucht man diesen Mangel dadurch zu kompensieren, dass man den Durchsatz erhöht. Hierunter leidet wiederum die Wirtschaftlichkeit des Spülens.

Man könnte natürlich den aus einem Düsenkörper austretenden Strahl beim Wechsel von einem Werkzeug zu einem anderen Winkel justieren. Dies ist jedoch praktisch nicht möglich, da mit Personalaufwand verbunden und somit dem Gedanken der Rationalisierung völlig entgegenstehend. Auch ist die Genauigkeit manueller Justierungen ungenügend.

US 2005/0169718 A1 beschreibt eine Kühlvorrichtung zum Fördern von Kühlmittel zu einem Werkzeug. Dabei werden mehrere Kühlvorrichtungen mit jeweils einem Einsatz für unterschiedliche Werkzeuge bereitgestellt, und zwar unter dem Gesichtspunkt der Montage. Das Werkzeug wird auf seiner gesamten Länge mit Kühlmittel beaufschlagt.

US 4 795 292 zeigt eine Werkzeugaufnahme mit Kühlkanälen sowie eine auswechselbare Düsenplatte, die mit der Stirnseite der Werkzeugaufnahme verschraubt ist. Die Düsenplatte weist Bohrungen auf, die mit den Kühlkanälen der Werkzeugaufnahme fluchten. Die Bohrungen der Düsenplatte sind dabei derart ausgeführt, dass sie unter einem bestimmten Winkel zur Längsachse des in der Werkzeugaufnahme eingespannten Werkzeugs verlaufen, Somit muss, um eine gezielte Kühlung und Abfuhr von Spänen am Bearbeitungsort zu erreichen, zuerst das Werkzeug auf die entsprechende Länge eingespannt und anschließend die passende Düsenplatte ausgewählt und von Hand mit der Werkzeugaufnahme verschraubt werden.

Weitere Kühlvorrichtungen, die integral, also fest mit der Werkzeugaufnahme ausgeführt sind, sind durch folgende Druckschriften bekannt geworden:
US 5 275 516
US 4 669 933
DE 43 26 023 A1.

Der Erfindung liegt die Aufgabe zugrunde, ein Verfahren und eine Vorrichtung anzugeben, mit welchem sich eine Werkzeugmaschine im allgemeinsten Sinne mit Werkzeugen derart bestücken lässt, dass der Auftreffort des oder der Mediumstrahlen stets der richtige ist, somit im allgemeinen der Ort des Spanabhebens, und das außerdem der Spül- und Kühlvorgang bei minimalem energetischem Aufwand vor sich geht, und somit so kostengünstig wie möglich.

Diese Aufgabe wird durch die Merkmale der selbständigen Ansprüche gelöst.

Die Erfinder haben damit eine verblüffend einfache Lösung gefunden, Diese besteht im wesentlichen darin, eine Vielzahl von Düsenkörpern vorzusehen und dabei einen einzelnen Düsenkörper derart zu gestalten, dass sich der Spül- und Kühlvorgang bei einem bestimmten Werkzeug in optimaler Weise gestalten lässt. Es wird somit ein bestimmter Düsenkörper zum Heranführen von Spül- und Kühlmedium einem ganz bestimmten Werkzeug angepasst und zugeordnet.

Dabei ist es auch denkbar, dass man einen Düsenkörper derart gestaltet, dass er für mehrere, sehr ähnlich gestaltete und dimensionierte Werkzeuge geeignet ist, um die oben genannte Aufgabe zu lösen.

Die Erfindung ist anhand der Zeichnung näher erläutert. Darin ist im einzelnen folgendes dargestellt:
- Figur 1: zeigt in einem Vertikalschnitt ein Werkzeug sowie einen Düsenkörper, beide eingebaut in eine Werkzeugmaschine, die im Ausschnitt nicht erkennbar ist.
- Figur 2: zeigt eine Draufsicht auf den Gegenstand von Figur 1.
- Figur 3.: ist eine Schnittansicht des unteren Teiles des Gegenstandes von Figur 1 in vergrößerter Darstellung.

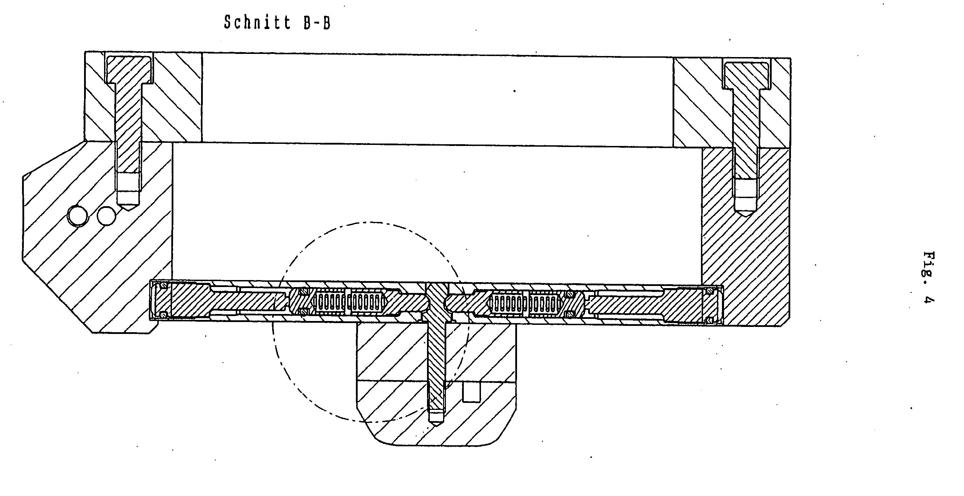

- Figur 4: ist eine Schnittansicht des Gegenstandes von Figur 2, gelegt in der Schnittebene B - B.
- Figur 5: ist eine Vergrößerung einer Einzelheit aus Figur 4.

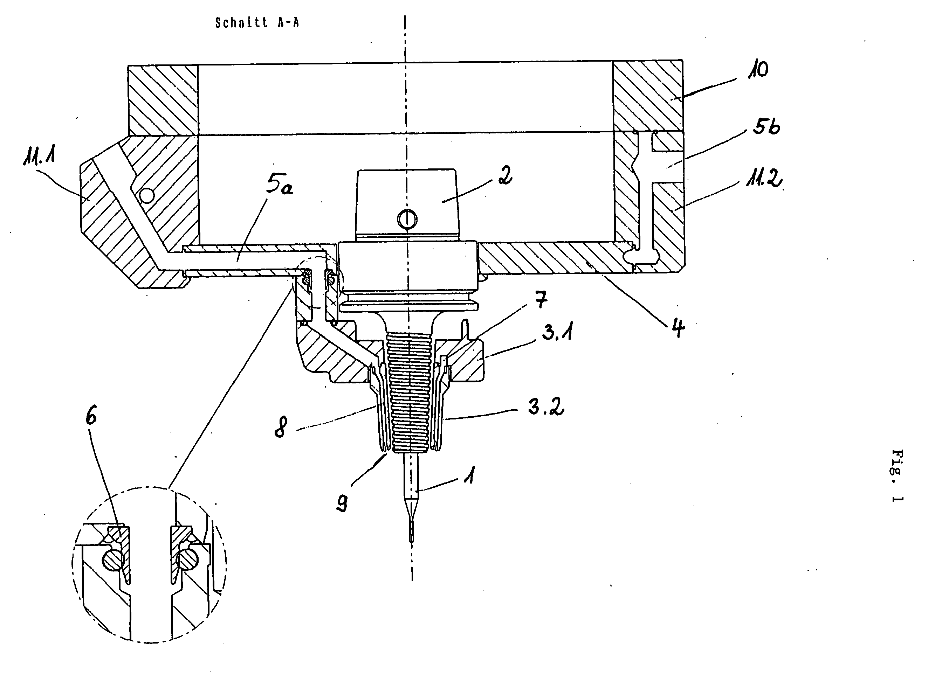

In Figur 1 erkennt man im einzelnen ein Werkzeug 1. Dieses kann ein Fräser oder ein Bohrer oder eine Reibahle oder ein sonstiges Werkzeug sein.

Das Werkzeug 1 ist in einer Werkzeugaufnahme 2 eingespannt. Die Werkzeugaufnahme ist in einem Maschinengestell fixiert, was nicht im einzelnen gezeigt ist.

Ein Düsenkörper 3 umfasst einen oberen, zylindrischen Teil 3.1 und einen unteren, kegelstumpfförmigen Teil 3.2. Der Düsenkörper 3 ist mittels eines Schnappverschlusses an einer Düsenplatte 4 fixiert, was weiter unten noch beschrieben werden soll.

Dem Düsenkörper 3 wird von oben her ein Spülmedium zugeführt. Dieses wird eingeleitet in einen Kanal 5, der sich in der Düsenplatte 4 in horizontaler Richtung erstreckt. Es durchströmt einen Ventilkörper 6, gelangt sodann in einen horizontalen Ringkanal 7, sodann zu Bohrungen 8, die sich im unteren kegelstumpfförmigen Teil 3.2 des Düsenkörpers befinden, und tritt aus durch Düsen 9. Die Düsen sind in vorliegendem Falle im Querschnitt kreisförmig. Es ist eine Vielzahl von Düsen über die untere Stirnfläche des kegelstumpfförmigen Teiles 3.2 verteilt angeordnet. Es ist aber auch denkbar, statt Düsen mit kreisförmigem Querschnitt Schlitzdüsen vorzusehen, die sich über den Umfang des kegelstumpfförmigen Teiles 3.2 erstrecken, und die einen praktisch lückenlosen "Vorhang" aus einem einzigen, ringförmigen Mediumstrahl erzeugen.

Wie man sieht, sind die Düsen 9 unter einem bestimmten Winkel zur Längsachse des Werkzeuges 1 angeordnet. Der Winkel ist derart bemessen, dass die aus den Düsen 9 austretenden Mediumstrahlen auf jene Stelle treffen, wo gespült und/oder gekühlt werden muss, somit in den spanabhebenden Bereich. Somit ist der Düsenkörper 3 in allen seinen Einzelheiten abgestimmt auf das hier verwendete Werkzeug 1.

Im vorliegenden Falle besteht zwischen dem Düsenkörper 3 und der Werkzeugaufnahme 2 keine feste Verbindung. Beide sind unabhängig voneinander in der Werkzeugmaschine montiert. Dies könnte jedoch auch anders sein.

Entscheidend ist, dass ein bestimmter Düsenkörper 3 einem bestimmten Werkzeug zugeordnet ist, damit das gewünschte Ergebnis erzielt wird, somit das Auftreffen des Mediumstrahles an der richtigen Stelle.

Das Zusammenfügen der beiden genannten Teile muss natürlich vor Beginn des Bearbeitungsvorganges geschehen. Dies kann in der Werkzeugmaschine geschehen, aber auch außerhalb, beispielsweise durch Bereitstellen eines bestimmten Düsenkörpers und eines bestimmten Werkzeuges. Wenn hierbei von "Zusammenfügen" die Rede ist, so ist hierunter jedenfalls auch ein nur loses Zusammenbringen zu verstehen. Es wäre aber auch ein mehr oder minder festes Zusammenfügen möglich.

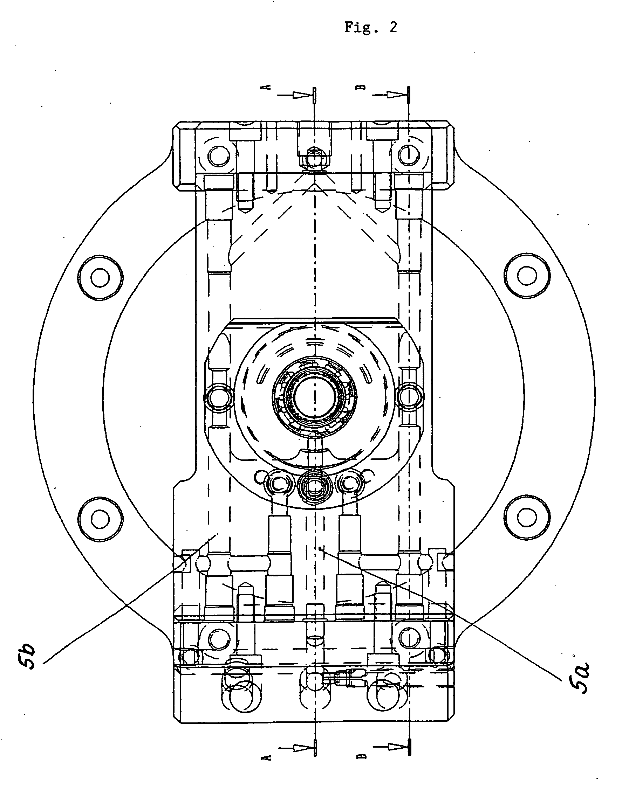

In der Draufsicht gemäß Figur 2 ist eine zweigeteilte Flanschplatte 10 erkennbar, die über Zwischenstücke 11 mit der Düsenplatte 4 fest verbunden ist. Siehe auch Figur 1.

Man erkennt aus Figur 2 die Kontur des zylindrischen Teiles des Düsenkörpers 3, ferner den Mediumkanal 5 in der Düsenplatte 4.

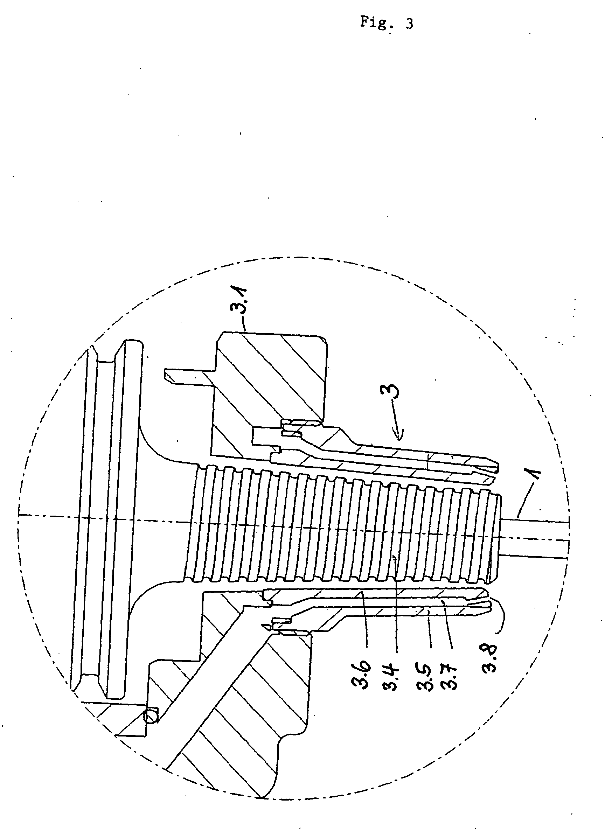

Aus der Schnittdarstellung gemäß Figur 3 erkennt man wiederum die folgenden Elemente: das Werkzeug 1, den Düsenkörper 3 mit seinem oberen zylindrischen Teil 3.1 und seinem unteren konischen Teil 3.2. Der Düsenkörper 3 umfaßt einen inneren, konischen Kern 3.4 mit einer umlaufenden Wendel, die nach unten führt und der Luftleitung und Luftkühlung dient.

Der Düsenkörper 3 umfaßt ferner eine äußere Buchse 5 und eine innere Buchse 6. Zwischen diesen beiden befindet sich ein Ringspalt 3.7. Der Ringspalt erstreckt sich über die gesamte Länge der beiden Buchsen 3.5, 3.6.

Der Ringspalt 3.7 ist am unteren Ende abgesperrt, abgesehen von Bohrungen 3.8. Diese sind gleichförmig über den gesamten Umfang des Ringspaltes 3.7 verteilt angeordnet. Die Bohrungen 3.8 sind entscheidend für die Wirkungsweise der Vorrichtung. Sie verlaufen nämlich unter einem bestimmten Neigungswinkel zur Längsachse des Werkzeuges 1. Der Neigungswinkel ist derart gestaltet, dass die austretenden Medienstrahlen an der Bearbeitungsstelle des Werkzeuges 1 auftreffen, somit dort, wo die Berührung zwischen Werkzeug 1 und Werkstück stattfindet.

Die in Figur 2 dargestellte Vergrößerung zeigt den Ventilkörper, der auch schon in Figur 1 erkennbar ist. Er umfasst eine Gummimanschette 6.1, die einen Grundkörper 6.2 umschließt. Die Gummimanschette 6.2 bewirkt, dass die Mediumbohrungen des Grundkörpers 6.2 nur dann von Medium durchströmbar sind, wenn der Düsenkörper 3 an der Düsenplatte 4 zuverlässig und einwandfrei durch Schnappverschluss angeschlossen ist.

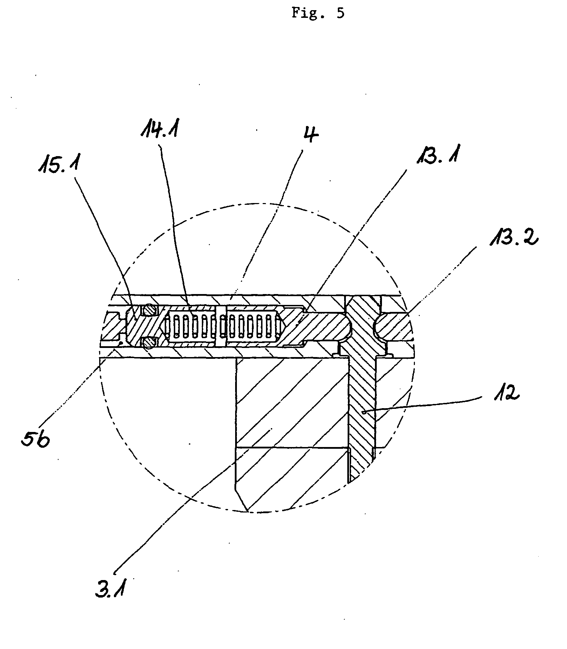

Die in Figur 5 gezeigte Schnittansicht lässt wiederum die Düsenplatte 4, die Flanschplatte 10 und die Zwischenstücke 11 erkennen.

Sie veranschaulicht vor allem die Art der Fixierung des Düsenkörpers 3 - siehe dessen oberen zylindrischen Teil 3.1 - an der Düsenplatte 4. Man erkennt einen Zapfen 12. Dieser ist in den zylindrischen Teil 3.1 des Düsenkörpers eingeschraubt. Es sind zwei Kolben 13.1, 13.2 vorgesehen. Diese liegen einander diametral gegenüber, bezogen auf den Zapfen 12 gesehen. Sie sind gleitbar in der Düsenplatte 4 gelagert und durch den Druck von Federn 14.1, 14.2 derart beaufschlagt, dass sie im Sinne eines Einspannens des Kopfes des Zapfens 12 wirken. Der Kopf des Zapfens 12 sowie die freien Enden der Kolben 13.1 und 13.2 sind entsprechend gestaltet. Der Kopf des Zapfens 12 weist in der dargestellten Schnittansicht eine Hohlkehle auf, und die freien Enden der Kolben 13.1 und 13.2 sind kugelförmig.

Ist der Düsenkörper 3 auf die dargestellte Weise eingespannt, so wirkt auch noch das Medium im Sinne eines Einspannens. Das Medium strömt nämlich in der genannten Bohrung 5 in der Düsenplatte 4 und wirkt auf jene Stirnflächen der beiden Kolben 13.1, 13.2, die von den kugelförmigen freien Enden abgewandt sind.

Die hier aufgeführten, in den Ansprüchen enthaltenen Bauteile könnten auch aus Kunststoff bestehen, beispielsweise der Düsenkörper.

Auch wäre es denkbar, zusätzlich zu der erfindungsgemäßen Maßnahme - Paarung eines bestimmten Werkzeuges mit einem bestimmten Düsenkörper - klassische Maßnahmen anzuwenden. So könnten beispielsweise die aus dem Düsenkörper austretenden Mediumstrahlen winkeljustierbar sein. Sie könnten beispielsweise aus Röhrchen austreten, deren Richtung einstellbar ist.

### Bezugszeichenliste

- 1: Werkzeug .
- 2: Werkzeugaufnahme
- 3: Düsenkörper
- 3.1: oberer zylindrischer Teil des Düsenkörpers
- 3.2: unterer kegelstumpfförmiger Teil des Düsenkörpers
- 3.4: konischer Kern
- 3.5: äußere Buchse
- 3.6: innere Buchse
- 3.7: Ringspalt
- 3.8: Düsenbohrungen
- 4: Düsenplatte
- 5: kanal in der Düsenplatte
- 6: Ventilkörper
- 6.1: Gummimanschette
- 6.2: Grundkörper
- 7: Ringkanal
- 8: Bohrungen
- 9: Düsen
- 10: Flanschplatte
- 11: Zwischenstücke
- 12: Zapfen
- 13.1: Kolben
- 13.2: Kolben
- 14.1: Feder
- 14.2: Feder

## Patentansprüche

1. Verfahren zum Bestücken einer Werkzeugmaschine mit Werkzeugen, die während des Betriebes der Werkzeugmaschine durch ein fließfähiges Medium gekühlt werden, mit den folgenden Verfahrensschritten:
1.1 es werden mehrere verschiedene Werkzeuge (1) samt Werkzeugaufnahmen (2) bereitgestellt, um aufeinanderfolgend Bearbeitungsvorgänge an einem Werkstück vorzunehmen:
1.2 die Werkzeuge (1) samt Werkzeugaufnahmen (2) werden in einem Werkzeugmagazin gespeichert;
1.3 es werden mehrere verschiedene Düsenvorrichtungen (3) bereitgestellt, deren jede mit einem bestimmten Werkzeug (1) samt Werkzeugaufnahme (2) zusammenfügbar und an eine Mediumquelle anschließbar ist, sowie jeweils eine derartige Mediumstrahlgeometrie aufweist, dass Mediumstrahlen an Stellen des Bearbeitens auftreffen;
1.4 die Düsenvorrichtungen (3) werden in einem Düsenvorrichtungsmagazin gespeichert;
1.5 jeweils eine bestimmte Düsenvorrichtung (3) wird vor Aufnahme des Betriebes der Werkzeugmaschine oder vor jedem Bearbeitungsgang mit einem bestimmten Werkzeug (1) samt Werkzeugaufnahme (2) zusammengefügt und an die Mediumquelle angeschlossen;
1.6 das Werkzeug (1) samt Werkzeugaufnahme (2) und die Düsenvorrichtung (3) sind lose zusammengefügt.

2. Verfahren gemäß Anspruch 1, **dadurch gekennzeichnet, dass** jedes Werkzeug (1) samt Werkzeugaufnahme (2) mit einer bestimmten Düsenvorrichtung (3) vor oder nach dem Abspeichern der Werkzeuge (1) samt Werkzeugaufnahme (2) zusammengefügt ist.

3. Verfahren gemäß Anspruch 1 oder 2, **dadurch gekennzeichnet, dass** das Werkzeug (1) samt Werkzeugaufnahme (2) und die Düsenvorrichtung (3) mittels einer Fördervorrichtung In die Werkzeugmaschine eingesetzt werden.

4. Anlage zum Bestücken einer Werkzeugmaschine mit Werkzeugen, die während des Betriebes der Werkzeugmaschine durch ein fließfähiges Medium gekühlt werden mit den folgenden Merkmalen:
4.1 mit mehreren verschiedenen Werkzeugen (1) samt Werkzeugaufnahmen (2), mit denen aufeinanderfolgend Bearbeitungsvorgänge an einem Werkstück vorgenommen werden;
4.2 mit mehreren verschiedenen Düsenvorrichtungen (3), deren jede mit einem Werkzeug (1) samt Werkzeugaufnahme (2) lose zusammenfügbar und an eine Mediumquelle anschließbar ist;
4.3 Jede Düsenvorrichtung (3) weist Düsenbohrungen auf, die derart gestaltet und angeordnet sind, dass der Mediumstrahl an der Stelle des Bearbeitens des Werkstückes auftrifft;
4.4 die Werkzeuge (1) samt Werkzeugaufnahme (2) sind in einem Werkzeugmagazin gespeichert;
4.5 die Düsenvorrichtungen (3) sind in einem Düsenvorrichtungsmagazin gespeichert;
4.6 es ist eine erste Fördervorrichtung vorgesehen, die ein bestimmtes Werkzeug (1) samt Werkzeugaufnahme (2) mit einer bestimmten Düsenvorrichtung (3) zusammenfügt;
4.7 es ist eine zweite Fördervorrichtung vorgesehen, die jeweils eine bestimmte Paarung aus einem Werkzeug (1) samt Werkzeugaufnahme (2) und einer Düsenvorrichtung (3) gemäß einem Programm in die Werkzeugmaschine einsetzt; wobei
4.8 das Werkzeug (1) samt Werkzeugaufnahme (2) und die Düsenvorrichtung (3) lose zusammengefügt sind.

5. Anlage nach Anspruch 4, **gekennzeichnet durch** die folgenden Merkmale:
5.1 jede Düsenvorrichtung (3) umfasst einen Innenkörper (3.6) und einen Außenkörper (3.5);
5.2 der Innenkörper (3.6) ist unter Belassen eines Ringspeltes (3.7) in den Außenkörper einsetzbar;
5.3 am Austrittsende der Düsenvorrichtung (3) ist ein Bund vorgesehen, der Düsenbohrungen (3.8) aufweist, aber im Übrigen den Ringspalt (3.7) absperrt.

6. Werkzeugmaschine, **dadurch gekennzeichnet, dass** die Werkzeugmaschine eine Anlage gemäß Anspruch 4 oder 5 umfasst.

## Claims

1. A method for loading a machine tool with tools which are cooled by a free-flowing medium during operation of the machine tool, comprising the following method steps:
1.1 several different tools (1) plus tool holders (2) are provided in order to perform successive machining processes on a workpiece;
1.2 the tools (1) plus tool holders (2) are stored in a tool magazine;
1.3 several different nozzle apparatuses (3) are provided, each of which can be joined with a specific tool (1) plus tool holder (2) and can be connected to a medium source, and each having such a medium-jet geometry that medium jets impinge at machining points;
1.4 the nozzle apparatuses (3) are stored in a nozzle apparatus magazine;
1.5 one specific nozzle apparatus (3) is each joined and connected to the medium source prior to starting the operation of the machine tool or prior to each machining process with a specific tool (1) plus tool holder (2);
1.6 the tool (1) plus tool holder (2) and the nozzle apparatus (3) are joined loosely.

2. A method according to claim 1, **characterized in that** each tool (1) plus tool holder (2) is joined with a specific nozzle apparatus (3) before and after the storing of the tools (1) plus tool holder (2).

3. A method according to claim 1 or 2, **characterized in that** the tool (1) plus tool holder (2) and the nozzle apparatus (3) are inserted into the machine tool by means of a conveying apparatus.

4. An installation for loading a machine tool with tools which are cooled during operation of the machine tool by a free-flowing medium, comprising the following features:
4.1 with several different tools (1) plus tool holders (2), with which successively machining processes are performed on a workpiece;
4.2 with several different nozzle apparatuses (3), each of which can be joined in a loose manner with a tool (1) plus tool holder (2) and can be connected to a medium source;
4.3 each nozzle apparatus (3) comprises nozzle bores which are configured and arranged in such a way that the medium jet impinges at the point of machining of the workpiece;
4.4 the tools (1) plus tool holder (2) are stored in a tool magazine;
4.5 the nozzle apparatuses (3) are stored in a nozzle apparatus magazine;
4.6 a first conveying apparatus is provided which joins a specific tool (1) plus tool holder (2) with a specific nozzle apparatus (3);
4.7 a second conveying apparatus is provided which inserts one specific pairing each of tool (1) plus tool holder (2) and a nozzle apparatus (3) into the machine tool according to a program, with
4.8 the tool (1) plus tool holder (2) and the nozzle apparatus (3) being joined loosely.

5. An installation according to claim 4, **characterized by** the following features:
5.1 each nozzle apparatus (3) comprises an interior body (3.6) and an exterior body (3.5);
5.2 the interior body (3.6) can be inserted in the exterior body by leaving an annular gap (3.7);
5.3 a collar is provided at the outlet end of the nozzle apparatus (3) which comprises nozzle bores (3.8), but blocks the annular gap (3.7) in the remaining part.

6. A machine tool, **characterized in that** the machine tool comprises an installation according to claim 4 or 5.

## Revendications

1. Procédé pour équiper une machine-outil d'outils qui sont refroidis avec un produit fluide pendant le fonctionnement de la machine-outil, comprenant les étapes de procédé suivantes :
1.1 plusieurs outils (1) différents sont préparés avec des raccords d'outils (2) pour réaliser des opérations d'usinage successives sur une pièce ;
1.2 les outils (1) avec les raccords d'outils (2) sont stockés dans un magasin d'outils ;
1.3 il est prévu plusieurs dispositifs de buses (3) différents, dont chacun peut être assemblé avec un outil (1) donné avec son raccord d'outil (2) et raccordé à une source de fluide et présente une géométrie de jets de fluide spécifique afin que des jets de fluide atteignent les points d'usinage ;
1.4 les dispositifs de buses (3) sont stockés dans un magasin de dispositifs de buses ;
1.5 chaque dispositif de buse (3) donné est assemblé, avant la mise en service de la machine-outil ou avant chaque étape d'usinage, avec un outil (1) donné avec son raccord d'outil (2) et raccordé à la source de fluide ;
1.6 l'outil (1) avec son raccord d'outil (2) et le dispositif de buse (3) sont assemblés sans serrage.

2. Procédé selon la revendication 1, **caractérisé en ce que** chaque outil (1) avec son raccord d'outil (2) est assemblé à un dispositif de buse (3) donné avant ou après la sortie de magasin de l'outil (1) avec son raccord d'outil (2).

3. Procédé selon la revendication 1 ou 2, **caractérisé en ce que** l'outil (1) avec son raccord d'outil (2) et le dispositif de buse (3) sont introduits dans la machine-outil au moyen d'un dispositif de transport.

4. Installation pour équiper une machine-outil d'outils qui sont refroidis avec un produit fluide pendant le fonctionnement de la machine-outil, présentant les caractéristiques suivantes :
4.1 plusieurs outils (1) différents avec leurs raccords d'outils (2), avec lesquels des opérations d'usinage successives sont exécutées une pièce ;
4.2 plusieurs dispositifs de buses (3) différents, dont chacun peut être assemblé sans serrage à un outil (1) avec son raccord d'outil et raccordé à une source de fluide ;
4.3 chaque dispositif de buse (3) présente des alésages de buse conformés et disposés de telle façon que le jet de fluide atteigne le point d'usinage de la pièce ;
4.4 les outils (1) avec leurs raccords d'outil (2) sont stockés dans un magasin d'outils ;
4.5 les dispositifs de buses (3) sont stockés dans un magasin de dispositifs de buses ;
4.6 il est prévu un premier dispositif de transport qui assemble un outil (1) donné avec son raccord d'outil (2) à un dispositif de buse (3) donné ;
4.7 il est prévu un deuxième dispositif de transport qui introduit une paire donnée d'un outil (1) avec son raccord d'outil (2) et d'un dispositif de buse (3) dans la machine-outil selon un programme ;
4.8 l'outil (1) avec son raccord d'outil (2) et le dispositif de buse (3) étant assemblés sans serrage.

5. Installation selon la revendication 4, **caractérisée en ce que** :
5.1 chaque dispositif de buse (3) comprend un corps intérieur (3.6) et un corps extérieur (3.5) ;
5.2 le corps intérieur (3.6) peut être introduit dans le corps extérieur en laissant un espace annulaire (3.7) ;
5.3 il est prévu à l'extrémité de sortie du dispositif de buse (3) un collet qui présente des alésages de buse (3.8) mais ferme par ailleurs l'espace annulaire (3.7).

6. Machine-outil, **caractérisée en ce que** la machine-outil comprend une installation selon la revendication 4 ou 5.
